# EUROPEAN PATENT APPLICATION

(11) **EP 1 672 026 A1**
(43) Date of publication of application: **21.06.2006**
(21) Application number: 04792112.7
(22) Date of filing: 06.10.2004
(51) Int. Cl.: C08L 63/00

(54) **RESIN COMPOSITION FOR PROTECTIVE FILM**

(30) Priority: 09.10.2003 JP 2003350936
(71) Applicant: NIPPON KAYAKU KABUSHIKI KAISHA, Tokyo 102-8172 (JP)
(72) Inventor: UMEYAMA, Chie, Tokyo 1150042 (JP); KAWATA, Yoshihiro, Tokyo 1150042 (JP); IMAIZUMI, Masahiro, Tokyo 1150042 (JP); HIRANO, Masahiro, Tokyo 1150042 (JP)
(74) Representative: Gille Hrabal Struck Neidlein Prop Roos
(86) International application number: PCT/JP2004/014756
(87) International publication number: WO 2005/035654

(57) **Abstract**

The present invention relates to a resin composition for protective films which comprises an epoxy resin having two or more epoxy groups, a curing agent, a curing accelerator, a solvent, and a colloidal slurry of fine silica particles having an average particle diameter, as determined by conversion from the specific surface area, of 50 nm or smaller, a pH of 6 to 8, and an alkali metal content of 5 ppm or lower. The resin composition gives a protective film which satisfies adhesiveness and visible-light transmission, which are performances conventionally required. The protective film further has high surface smoothness even when the substrate surface is not smoothed. The resin composition has satisfactory storage stability and does not stain liquid crystal. Furthermore, a cured film obtained from the resin composition has excellent high-temperature resistance, especially ITO resistance. The resin composition is hence suitable for use in forming a protective film for the colored resin films of color filters for liquid-crystal display.

## Description

### TECHNICAL FIELD

The present invention relates to a resin composition suitable for forming protective films, in particular to a resin composition having good storage stability that gives a protective film of excellent heat resistance to be mounted on colored films (for example, colored resin films) formed on the surfaces of glass substrates and the like.

### BACKGROUND ART

Liquid-crystal display elements are dipped in a solvent, an acid, an alkali solution and the like in the production process. In addition, the surfaces of the elements are locally exposed to high temperature during sputtering for ITO (Indium Tin Oxide) layer formation. For preventing the elements from being deteriorated or damaged under such severe conditions, a protective film that is resistant to such treatments is generally formed thereon. In addition to the above-mentioned requirement, the protective film is further required to satisfy the following requirements: It does not stain liquid crystal. Its surface is smooth. It has a good adhesiveness to the substrate on which it is formed and also to the layer to be formed thereon. It has a high visible-light transmittance so that it does not lower the brightness of liquid crystal display. It is resistant to aging such as discoloration, whitening and yellowing and the like. It is tough enough to resist to impact, strain and the like. Moreover, it is desired to have good stability to aging during application or during long-time storage in view of productivity and handling.

As materials for such protective films, melamine resin, polyimide resin, acrylic resin, epoxy resin and others have been proposed. At present, however, no one knows a well-balanced material for the films that satisfies all requirements, in particular, because higher heat resistance has been recently required along with increase of temperature on oriented film formation and increase of vapor deposition temperature of ITO.

For example, melamine resin has good heat resistance, but has a problem that it is often repelled on substrates or filters due to its extremely poor adhesiveness to glass substrates. Polyimide resin has good heat resistance, but on the other hand, it has problems that its transparency is not good enough and is lack of storage stability of resin and that its poor solubility limits usable organic solvents, which may corrode color filters. Acrylic resin has good visible-light transmittance, but its heat resistance is not enough and thus has a problem that its film surface is wrinkled or cracked at high temperature. To solve these problems, a composition containing a transparent filler coated with epoxy resin is proposed, but purity and storage stability of the filler are insufficient (see Patent Literature 1). In addition, protective films (see Patent Literatures 2 and 3) made of acrylic resin having an epoxy group or made of epoxy resin and an o-cresol-novolac-type curing agent have been investigated, but they still have problems that their adhesiveness is insufficient, or that yellowing, wrinkles and cracks of the films caused by heating on the vapor deposition of ITO lower light transmittance. To improve the yellowing resistance of the films, an acid anhydride is tried to be used as the curing agent, however, it has problems in storage stability in terms of its reactivity and its moisture absorption. Further, in addition to the problem that the usable organic solvent is limited in solubility, the solvent has a problem in terms of its safety. Furthermore, the Patent Literature 4 discloses a method for forming a protective film on a color filter with a composition containing a hydrolyzed product of a specific silyl acrylate having colloidal silica, a polyfunctional acrylate monomer and a photo polymerization initiator and not substantially containing any solvent in order to obtain a scratch resistant protective film having improved water resistance and moisture permeability in long-time contact with water or warm water. This method describes that acidic colloidal silica is preferable and a double-layer protective film is preferably formed. Although this protective film seems to be excellent in ITO resistance, water resistance, moisture permeability and the like, the further improvement is desired, considering the time and labor to form a double-layer protective film and a potential problem in storage stability of a resin composition, which is not mentioned in the Patent Literature 4.
Patent literature 1: JP-A-11-315249
Patent literature 2: JP-A-5-140274
Patent literature 3: JP-A-5-140267
Patent literature 4: JP-A-11-231120

### DISCLOSURE OF THE PRESENT INVENTION

### PROBLEM TO BE SOLVED BY THE PRESENT INVENTION

The object of the present invention is, without forming a double-layer protective film, to provide a resin composition that has good heat resistance, water resistance and visible-light transmittance, and has high surface smoothness and can form a protective film excellent resistance under ITO vapor deposition especially, when it is used for protecting colored resin films of color filters for liquid-crystal display, and also has excellent storage stability.

### MEANS TO SOLVE THE PROBLEM

The present inventors have studied a way to solve the above mentioned problems with enthusiasm, and as a result, have found that, when a resin composition for protective films is used by adding colloidal silica, which is occasionally added as a filler to a protective film, to an epoxy resin having two or more epoxy groups or a polyfunctional acrylic resin, especially to an epoxy resin having two or more epoxy groups, then, an alkali metal content and a pH in the colloidal silica, which have not attracted attentions heretofore, have an important effect on properties and storage stability of the protective film, and have completed the present invention. In other words, the present inventors have found that a resin composition for protective films obtained by adding a colloidal slurry dispersed with fine silica particles having specific properties (low alkali content, pH of 6 to 8 and the like) to a polyfunctional monomer, especially to an epoxy resin having two or more epoxy groups, can form a protective film of good resistance on ITO vapor deposition and also has excellent storage stability.

Namely, the present invention relates to the following:
(1) A resin composition for protective films which comprises an epoxy resin having two or more epoxy groups, a curing agent, a curing accelerator, a solvent, and a colloidal slurry of fine silica particles; wherein the fine silica particles have an average particle diameter, as determined by conversion from the specific surface area, of 50 nm or smaller, a pH of 6 to 8, and an alkali metal content of 5 ppm or lower;
(2) The resin composition described in the above (1), wherein the fine silica particles (solid content) in the colloidal slurry is 10 to 150 parts by mass based on 100 parts by mass of the total amount of the epoxy resin having two or more epoxy groups, the curing agent and the curing accelerator;
(3) The resin composition described in the above (1) or (2), wherein the curing agent is a polyhydric phenol having a cyclic terpene skeleton;
(4) The resin composition described in the above (3), wherein the polyhydric phenol having a cyclic terpene skeleton is a compound obtained by the addition of two phenol molecules to one cyclic terpene compound molecule and/or a compound obtained by condensation reaction of the above compound with aldehydes and/or ketones in the presence of an acid catalyst;
(5) The resin composition described in any one of above (1) to (4), wherein the curing accelerator is an imidazole-type curing accelerator;
(6) A resin composition for protective films which comprises an acrylic resin, a solvent and a colloidal slurry of fine silica particles, wherein the fine silica particles have an average primary particle diameter, as determined by conversion from the BET specific surface area, of 50 nm or smaller, a pH of 6 to 8, and an alkali metal content of 5 ppm or lower;
(7) The resin composition described in any one of above (1) to (6), wherein a film of 1 µm in thickness made of the resin composition for protective films has a transmittance of 95% or higher at 400 nm;
(8) The resin composition described in any one of above (1) to (7), that is for a protective film for a color filter;
(9) A substantially transparent protective film obtained by curing the resin composition described in any one of above (1) to (8); and
(10) A liquid-crystal display device equipped with a color filter comprising the protective film described in the above (9).

### EFFECT OF THE PRESENT INVENTION

The resin composition for protective films of the present invention is excellent in storage stability and operability and can form a cured film having excellent transparency and especially excellent properties such as high ITO resistance, high surface smoothness and high water resistance, and thus suitable for use in forming a protective film for colored resin films. Therefore, the resin composition used for forming a protective film for a color filter and the like of a color liquid-crystal display device can improve the reliability of the display device.

### BEST MODES FOR CARRYING OUT THE PRESENT INVENTION

The present invention is described in detail hereinunder. Unless otherwise specifically indicated in the following, "%" and "parts" mean "% by mass" and "parts by mass" respectively.

In a colloidal slurry of fine silica particles to be used for a resin composition for protective films of the present invention, the suitable average particle diameter of the fine silica particles, as determined by conversion from the specific surface area, is 50 nm or smaller, preferably 45 nm or smaller, more preferably 35 nm or smaller, considering maintaining high transparency as a protective film and clogging of particles in a filtration step.

According to studies of the present inventors, an alkali metal content (Na etc.) in a colloidal slurry of fine silica particles to be used for a resin composition for protective films tends to stain liquid crystal in a liquid-crystal display device equipped with a color filter. To prevent the stain, the concentration of the alkali metal content (Na etc.) in a colloidal slurry of fine silica particles to be used for a resin composition of the present invention is 5 ppm or lower, preferably 3 ppm or lower, more preferably 1 ppm or lower.

The pH of a colloidal slurry of fine silica particles to be used for a resin composition of the present invention is in a neutral range of 6 to 8, preferably 6.5 to 7.5, more preferably 7.0 to 7.5, because the pH has an effect on reactivity of a resin component and storage stability of the resin composition.

The colloidal slurry of fine silica particles to be used for a resin composition of the present invention can be generally prepared by hydrolyzing a silicate ester using a method described in the JP-A-2004-91220 or a similar method, or is available on the market as for example, Quartron PL series (trade name, by Fuso Chemical Co., Ltd.).

The blend amount of a colloidal slurry of fine silica particles, which varies depending on a combined resin component, is usually 10 to 150 parts, preferably 20 to 100 parts, more preferably 25 to 80 parts as solid silica particles based on 100 parts of the total amount of an epoxy resin having two or more epoxy groups, a curing agent and a curing accelerator (hereinafter, these three components are altogether referred to simply as resin components).

Any resin can be used in the resin composition of this invention as far as it is polyfunctional curable resin. Epoxy resins and/or acrylic resins containing two or more epoxy groups are preferable, the former is more preferable. Epoxy resins having two or more epoxy groups include, for example, polyfunctional epoxy resins such as glycidyl-etherified compounds of polyhydric compounds; polyfunctional epoxy resins such as glycidyl-etherified compounds of various novolac resins; alicyclic polyfunctional epoxy resins; aliphatic polyfunctional epoxy resins; heterocyclic polyfunctional epoxy resins; polyfunctional epoxy resins such as glycidyl ester type; polyfunctional epoxy resins such as glycidyl amine type; polyfunctional epoxy resins such as glycidylated halogenated phenols, and the like.

Polyfunctional epoxy resins represented by glycidyl-etherified compounds of polyhydric compounds include those of polyhydric compounds using as a raw material phenol such as 2-(4-hydroxyphenyl)-2-[4-[1,1-bis(4-hydroxyphenyl)-ethyl]-phenyl]-propane, bisphenol A, bisphenol F, bisphenol S, 4,4'-biphenol, tetramethyl-bisphenol A, dimethyl-bisphenol A, tetramethyl-bisphenol F, dimethyl-bisphenol F, tetramethylbisphenol S, dimethyl-bisphenol S, tetramethyl-4,4'-biphenol, dimethyl-4,4'-biphenol, 1-(4-hydroxyphenyl)-2-[4-(1,1-bis-(4-hydroxyphenyl)-ethyl)-phenyl]-propane, 2,2'-methylene-bis(4-methyl-6-tert-butylphenol), 4,4'-butylidene-bis(3-methyl-6-tert-butylphenol), trishydroxyphenyl-methane, resorcinol, hydroquinone, pyrogallol, phloroglucinol, phenols having diisopropylidene skeleton, phenols having fluorene skeleton such as 1,1-di-4-hydroxyphenylfluorene and the like, and polyhydric compounds such as phenolated polybutadiene and the like.

Polyfunctional epoxy resins represented by glycidyl-etherified compounds of various novolac resins include those of various novolac resins using as a raw material phenol such as phenol, cresols, ethylphenols, butylphenols, octylphenols, bisphenols such as bisphenol A, bisphenol F and bisphenol S and the like, and naphthols and the like, as well as phenol-novolac resins having xylylene skeleton, phenol-novolac resins having dicyclopentadienyl skeleton, phenol-novolac resins having biphenyl skeleton, phenol-novolac resins having fluorene skeleton, and the like.

Alicyclic polyfunctional epoxy resins include alicyclic polyfunctional epoxy resins having alicyclic skeleton such as cyclohexane. Aliphatic polyfunctional epoxy resins include glycidyl-etherified compounds of polyvalent alcohols such as 1,4-butanediol, 1,6-hexanediol, polyethylene glycol, pentaerythritol and the like. Heterocyclic polyfunctional epoxy reins include those having hetero ring such as isocyanuric ring, hydantoin ring and the like. Epoxy resins of glycidyl ester type include epoxy resins comprising of carboxylic acid ester such as diglycidyl hexahydrophthalate and the like. Glycidyl amine type polyfunctional epoxy resins include those glycidylated with amines such as aniline, toluidine and the like. Glycidylated epoxy resins of halogenated phenols include those obtained by glycidylation of halogenated phenols such as brominated bisphenol A, brominated bisphenol F, brominated bisphenol S, brominated phenol-novolac resins, brominated cresol-novolac resins, chlorinated bisphenol S, chlorinated bisphenol A and the like.

Among these epoxy resins, considering heat resistance and transparency, epoxy resins of 2-(4-hydroxyphenyl)-2-[4-[1,1-bis(4-hydroxyphenyl)-ethyl]-phenyl]-propane bisphenol A, phenol-novolac resins having fluorene skeleton, alicyclic polyfunctional epoxy resins having alicyclic skeleton such as cyclohexane and the like, glycidyl etherates of polyvalent alcohols such as pentaerythritol and the like, are preferable, and an epoxy resin of 2-(4-hydroxyphenyl)-2-[4-[1,1-bis(4-hydroxyphenyl)-ethyl]phenyl]propane is the most preferable.

The curing agent to be used for the resin composition of the present invention includes phenol-type curing agents, acid anhydride-type curing agents, carboxylic acid-type curing agents, amine-type curing agents and hydrazide-type curing agents. Among these, phenol-type curing agents, especially a polyhydric phenol compound having a cyclic terpene skeleton is preferable in view of stability of time course, moisture resistance and solubility in a solvent. When the above compound is used as a curing agent, a cured product of the resin composition is almost free from yellowing at high temperature.

The polyhydric phenol compound having the cyclic terpene skeleton is not especially limited, so far as it has a cyclic terpene skeleton and two or more phenolic hydroxyl groups in the molecule. Specifically, as described in detail in, for example, Japanese Patent 2,572,293, it includes a polyhydric phenol compound having a cyclic terpene skeleton in which about two molecules of phenols are added to one molecule of a cyclic terpene compound by reacting the cyclic terpene compound with the phenols, or a compound (high molecular weight polyhydric phenol compound having a cyclic terpene skeleton) obtained by subjecting the above compound to condensation reaction with one or more compounds selected from the group consisting of aldehydes and ketones in the presence of an acid catalyst, and the like.

The hydroxyl equivalent of the polyhydric phenol compound having a cyclic terpene skeleton is not especially limited, and it is usually about 140 to 190 g/eq, preferably 150 to 180 g/eq, more preferably 155 to 175 g/eq.

The preferable polyhydric phenol compound having a cyclic terpene skeleton includes a polyhydric phenol compound having a cyclic terpene skeleton, wherein a novolac-type polyhydric phenol compound having a cyclic terpene skeleton was polymerized.

The cyclic terpene compound to be used as a raw material for the above polyhydric phenol compound having a cyclic terpene skeleton includes a monoterpene compound (a cyclic compound obtained by coupling two units of isoprene by biosynthesis) such as limonene (formula (1) below), dipentene, that is, an optical isomer of limonene, a-pinene (formula (2) below), β-pinene (formula (3) below), a-terpinene (formula (4) below), β-terpinene (formula (5) below), γ-terpinene (formula (6) below), 3,8-menthanediene (formula (7) below), 2,4-menthanediene (formula (8) below) and terpinolene (formula (9) below) and the like.

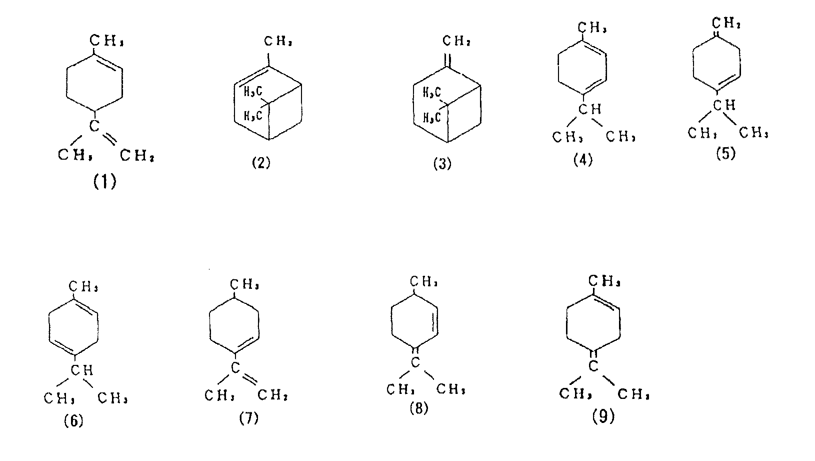

The phenols to be added to the cyclic terpene compounds include, for example, phenols unsubstituted or substituted with any of an alkyl group of 1 to 3 carbon atoms, an aryl group, a hydroxyl group and the like, such as phenol, o-cresol, 2,6-xylenol and o-allylphenol. Among these, phenol or o-cresol is preferable and phenol is especially preferable.

The aldehydes and ketones that are used for producing the high molecular weight polyhydric phenol compound having a cyclic terpene skeleton include aliphatic aldehydes or ketones of 1 to 6 carbon atoms, such as formaldehyde, paraformaldehyde, acetaldehyde, benzaldehyde, hydroxybenzaldehyde, acetone and cyclohexanone; or benzaldehyde optionally substituted with a hydroxyl group, etc.

Solvents such as aromatic hydrocarbons, alcohols and ethers are usually used for the reaction of a cyclic terpene compound and phenols, while hydrochloric acid, sulfuric acid, phosphoric acid, polyphosphoric acid, boron trifluoride and the like are used as an acid catalyst in the condensation reaction of the product of the above reaction and one or more compounds selected from the group consisting of the aldehydes and ketones.

Thus obtained polyhydric phenol compound having a cyclic terpene skeleton, for example, a reaction product of limonene and phenol is presumed to be a mixture of the compounds of following formula (I) and formula (II).

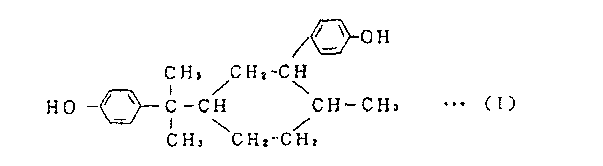

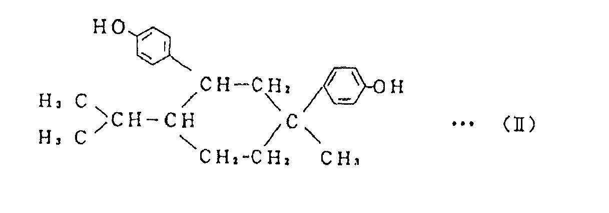

The above polyhydric phenol compound having a cyclic terpene skeleton functions as a curing agent in the present invention. It is usually used alone, but may be used in combination with other curing agents. In the combination, the other curing agents are preferably used within a range where properties such as heat resistance, yellowing resistance, visible-light transmittance of the obtained cured product are not impaired. Usually they are preferably used within a range of about 0 to 20% of the total amount of the curing agents. Curing agents that can be used in the combination include acid anhydride-type curing agents, carboxylic acid-type curing agents, amine-type curing agents, phenol-type curing agents, other than the above polyhydric phenol compound having a cyclic terpene skeleton, hydrazide-type curing agents and the like.
Acid anhydride type curing agents include, for example, aromatic carboxylic acid anhydrides such as phthalic acid anhydride, trimellitic acid anhydride, pyromellitic acid anhydride, benzophenone tetracarboxylic acid anhydride, ethylene glycol trimellitic acid anhydride, biphenyl tetracarboxylic acid anhydride and the like; aliphatic carboxylic acid anhydride such as azelaic acid anhydride, sebacic acid anhydride, dodecanedioic acid anhydride and the like; alicyclic carboxylic acid anhydride such as tetrahydrophthalic acid anhydride, hexahydrophthalic acid anhydride, nadic acid anhydride, HET acid anhydride, himic acid anhydride and the like.

Carboxylic acid type curing agents include, for example, aliphatic polycarboxylic acids having 2 to 22 carbon atoms such as succinic acid, adipic acid, azelaic acid, sebacic acid and the like; aromatic carboxylic acids such as phthalic acid, isophthalic acid, terephthalic acid, 1,2,4-benzenetricarboxylic acid, 1,2,4,5-benzenetetracarboxylic acid, naphthalene-di(or tetra) carboxylic acid and the like; alicyclic polycarboxylic acids such as tetrahydrophthalic acid, hexahydrophthalic acid, methylhexahydrophthalic acid and the like; and the like.

Amine type curing agents include, for example, aromatic amines such as diaminodiphenylmethane, diaminodiphenylsulfone, diaminodiphenylether, p-phenylenediamine, m-phenylenediamine, o-phenylenediamine, 1,5-diaminonaphthalene, m-xylylenediamine; aliphatic amines such as ethylenediamine, diethylenediamine, isophoronediamine, bis(4-amino-3-methyldicyclohexyl)-methane, polyether diamine; guanidines such as dicyandiamide, 1-(o-tolyl)-biguanide.

Phenol type curing agents other than polyvalent alcohols having foregoing cyclic terpene skeleton include, for example, novolac resin using various as a raw material phenols such as bisphenol A, bisphenol F, bisphenol S, 4,4'-biphenylphenol, tetramethylbisphenol A, dimethylbisphenol A, tetramethylbisphenol F, dimethylbisphenol F, tetramethylbisphenol S, dimethylbisphenol S, tetramethyl-4,4'-biphenol, dimethyl-4,4'-biphenylphenol, 1-(4-hydroxyphenyl)-2-[4-(1,1-bis-(4-hydroxyphenyl)-ethyl)-phe nyl]-propane, 2,2'-methylene-bis(4-methyl-6-tert-butylphenol), 4,4'-butylidene-bis(3-methyl-6-tert-butylphenol), trishydroxyphenylmethane, resorcinol, hydroquinone, pyrogallol, phenols having isopropylidene skeleton, phenols having fluorene skeleton such as 1,1-di-4-hydroxyphenylfluorene and the like, phenolated polybutadiene, phenol, cresols, ethylphenols, butylphenols, octylphenols, bisphenol A, bisphenol F, bisphenol S, naphthol and the like; novolac resin having xylylene skeleton, phenol-novolac resin having dicyclopentadiene skeleton, phenol-novolac resin having biphenyl skeleton, phenol-novolac resin having fluorene skeleton, phenol-novolac resin having furan skeleton, and the like.

Hydrazide type curing agents include, for example, dihydrazide type curing agents such as carbodihydrazide, oxalic dihydrazide, malonic dihydrazide, succinic dihydrazide, glutaric dihydrazide, adipic dihydrazide, pimelic dihydrazide, suberic dihydrazide, azelaic dihydrazide, sebacic dihydrazide, dodecanedioic dihydrazide, hexadecanedioic dihydrazide, terephthalic dihydrazide, isophthalic dihydrazide, 2,6-naphthoic dihydrazide, 4,4'-bisbenzenedihydrazide, 1,4-naphthoic dihydrazide, 2,6-pyridinedihydrazide, 1,4-cyclohexanedihydrazide, tartaric dihydrazide, malic dihydrazide, iminodiacetic dihydrazide, N,N'-hexamethylene-bissemicarbazide, itaconic dihydrazide; polyfunctional hydrazide-type curing agents such as pyromellitic trihydrazide, ethylenediamine tetraacetic tetrahydrazide, 1,2,4-benzenetrihydrazide and the like.

The amount of the curing agent to be used in the composition is generally from 0.2 to 1.8, preferably 0.4 to 1.4, more preferably 0.6 to 1.2 in terms of the equivalent ratio of the functional group in the curing agent to the epoxy group in the epoxy resin.

In the present invention, imidazole type curing accelerator may be used as a preferable curing accelerator, and it may be used in combination with any other compound known as a catalyst promoting the curing of epoxy resin, for example, tertiary-amines, phosphines in an amount of not interfering with the physical properties.

As the imidazole type curing accelerators, various imdazole compounds include 2-methylimidazole, 2-ethyl-4-methylimidazole, 2-phenylimidazole, 2-undecylimidazole, 2-heptadecylimidazole, 2-phenyl-4-methylimidazole, 1-benzyl-2-phenylimidazole, 1-benzyl-2-methylimidazole, 1-cyanoethyl-2-methylimidazole, 1-cyanoethyl-2-phenylimidazole, 1-cyanoethyl-2-undecylimidazole, 2,3-dihydro-1H-pyrrolo-[1,2-a]-benzimidazole, 2,4-diamino-6-(2'-methylimidazole(1'))-ethyl-s-triazine, 2,4-diamino-6-(2'-undecylimidazole(1'))-ethyl-s-triazine, 2,4-diamino-6-(2'-ethyl,4-methylimidazole(1'))-ethyl-s-triazine, 2,4-diamino-6-(2'-methylimidazole(1'))ethyl-s-triazine/isocyanuric acid adduct, 2-methylimidazole/isocyanuric acid 2:3 adduct, 2-phenylimidazole/isocyanuric acid adduct, 2-phenyl-3,5-dihydroxy-methylimidazole, 2-phenyl-4-methyl-5-hydroxymethylimidazole, or 1-cyanoethyl-2-phenyl-3,5-dicyanoethoxy-methylimidazole and the like.

The amount of a curing accelerator to be used for an epoxy resin composition is usually about 0.1 to 10 parts based on 100 parts of the epoxy resin, but in the case of these imizazole-type curing accelerators, the amount to be used is usually at least 0.1 parts, preferably at least 0.3 parts, more preferably at least 0.5 parts, but at most 7 parts, preferably at most 5 parts, more preferably at most 4 parts, further more preferably at most 3.5 parts, based on 100 parts of the epoxy resin. If the amount of the imidazole-type curing accelerator is too small, the composition could not be sufficiently crosslinked resulting in poor heat resistance of the protective film formed; but if too large, the storage stability of the composition, the yellowing resistance thereof in curing and the liquid crystal staining resistance would be impaired.

Acrylic resins used in this invention include, for example, 2-hydroxyethyl (meth)acrylate, 2-hydroxypropyl (meth)acrylate, 1,4-butanediol mono(meth)acrylate, carbitol (meth)acrylate, acryloyl morpholine, half ester of reaction products synthesized by (meth)acrylates containing hydroxyl group (for example, 2-hydroxyethyl (meth)acrylate, 2-hydroxypropyl (meth)acrylate, 1,4-butanediol mono(meth)acrylate, etc.) and polyvalent carboxylic anhydrides (for example, succinic anhydride, maleic anhydride, phthalic anhydride, tetrahydrophthalic anhydride, hexahydrophthalic anhydride, etc.); polyethyleneglycol di(meth) acrylate, tripropyleneglycol di(meth)acrylate, trimethylolpropane tri(meth)acrylate, trimethylolpropane polyethoxytri(meth)acrylate, glycerin polypropoxy- tri(meth)acrylate, dimethacrylate of ε-caprolactone adduct with neopentylglycol hydroxypivalate (for example, trade name: KAYARAD HX-220, HX-620, etc. by Nippon Kayaku Co. Ltd.,); pentaerythritol tetra(meth) acrylate; poly(meth)acrylate of reaction products of ε-caprolactone with dipentaerythritol; dipentaerythritol poly (meth)acrylate; epoxy(meth)acrylate of reaction products of mono- or poly-glycidylated compounds (for example, butyl glycidyl ether, phenyl glycidyl ether, polyethyleneglycol diglycidyl ether, polypropyleneglycol diglycidyl ether, 1,6-hexanediol diglycidyl ether, diglycidyl hexahydrophthalate, glycerin polyglycidyl ether, glycerin polyethoxyglycidyl ether, trimethylolpropane polyglycidyl ether, trimethylolpropane polyethoxypolyglycidyl ether, etc.) with (meth)acrylic acid; the reaction products of 3,9-bis (2-hydroxy-1,1-dimethylethyl)-2,4,8,10-tetraoxaspiro[5.5]undec ane,2-(2-hydroxy-1,1-dimethylethyl)-5-ethyl-5-hydroxymethyl-1, 3-dioxane, tricyclodecane-dimethanol, cyclohexane-dimethanol and the like and (meth)acrylic acid; and these compounds only, or addition polymers by the combination of two or more these compounds.

In order to cure these acrylic resins, generally, photo curing method wherein photo-polymerization initiator is added and UV light is irradiated, or heat curing method wherein peroxides or azo compound is added and is heated, is may be carried out.

Specific examples of photo-polymerization initiators used in resin composition of the present invention include, for example, benzoins such as benzoin, benzoin methyl ether, benzoin ethyl ether, benzoin propyl ether, benzoin isobutyl ether and the like; acetophenones such as acetophenone, 2,2-diethoxy-2-phenyl - acetophenone, 1,1-dichloroacetofenone, 2-hydroxy-2-methylphenylpropane-1-one, diethoxyacetofenone, 1-hydroxycyclohexyl phenyl ketone, 2-methyl-1-[4-(methylthio)-phenyl]-2-morpholino-propane-1-one and the like; anthraquinones such as 2-ethylanthraquinone, 2-tertiary-butylanthraquinone, 2-chloroanthraquinone, 2-aminoanthraquinone and the like; thioxanthones such as 2,4-diethylthioxanthone, 2-isopropylthioxanthone, 2-chloro-thioxanthone and the like; ketals such as acetophenone dimethylketal, benzyl dimethylketal and the like; benzophenones such as benzophenone, 4-benzoyl-4'-methyldiphenylsulfide, 4,4'-bismethylamino- benzophenone and the like; phosphine oxides such as 2,4,6-tri- methyl-benzoyldiphenylphosphine oxide, bis(2,4,6-trimethyl- benzoyl)-phenylphosphine oxide and the like; and the like. The amount of these compounds is generally about 1 to 30%, preferably 2-25%, based on 100% of the solid content in resin composition.

When an acrylic resin is used for the resin composition of the present invention, fine silica particles having a primary particle diameter of 50 nm or smaller determined by conversion from the BET specific surface area method are used in the above colloidal slurry of fine silica particles in order to maintain transparency of protective films.

The blend amount of colloidal slurry of fine silica particles, which varies depending on a resin component to be combined with, is usually 10 to 100 parts, preferably 20 to 80 parts, more preferably 25 to 70 parts as solid silica particles based on 100 parts of acrylic resin components (acrylic resin and photopolymerization initiator). In case of more than 100 parts, dispersion of the fine silica particles goes worse and it tends to bring a coagulation and poor storage stability, or a resin component goes more thixotropic and it causes a difficulty to form a uniform film. In case of less than 10 parts, there is a fear of difficulty in giving ITO resistance.

An epoxy resin and an acrylic resin can be used together for the resin composition of the present invention depending on circumstances. When an epoxy resin and an acrylic resin are used together, the epoxy resin, a curing agent and a curing accelerator may be subjected to thermal curing after photocuring with a photopolymerization initiator, or acrylic groups may be subjected to thermal polymerization or polymerization using a peroxide to obtain a acrylic resin, at the same time of thermal curing of the epoxy resin, a curing agent and a curing accelerator.

When an epoxy resin and an acrylic resin are used together for the resin composition of the present invention, fine silica particles having a primary particle diameter of 50 nm or smaller determined by conversion from the specific surface area are used in the colloidal slurry of fine silica particles in order to maintain transparency of protective films.

The blend amount of a colloidal slurry of fine silica particles, which varies depending on a resin component to be combined with, is usually 10 to 150 parts, preferably 20 to 100 parts, more preferably 25 to 80 parts as solid silica particles based on 100 parts of resin components (epoxy resin having two or more epoxy groups, curing agent and curing accelerator, and/or acrylic resin and photopolymerization initiator). In case of more than 100 150 parts, dispersion of the fine silica particles goes worse and it tends to bring a coagulation and poor storage stability, or a resin component goes more thixotropic and it causes a difficulty to form a uniform film. In case of less than 10 parts, there is a fear of difficulty in giving ITO resistance.

Organic solvents used in resin composition of the present invention include, for example, alcohols such as methanol, ethanol, propanol, butanol and the like; preferably lower alcohols having 1 to 4 carbon atoms; glycol ethers such as ethylene glycol monomethyl ether, ethylene glycol monoethyl ether, ethylene glycol monobutyl ether, propylene glycol monomethyl ether, 3-methoxybutanol, 3-methyl-3-methoxybutanol and the like; preferably lower ether having 1 to 4 carbon atoms of alkylene glycol having 1 to 4 carbon atoms; alkylene glycol ether acetates such as ethylene glycol monoethyl ether acetate, ethylene glycol monobutyl ether acetate, propylene glycol monomethyl ether acetate, propylene glycol monoethyl ether acetate, 3-methoxybutyl acetate, 3-methyl-3-methoxybutyl acetate, ethylethoxy propiolate and the like; preferably lower ether acetate having 1 to 4 carbon atoms of alkylene glycol having 1 to 4 carbon atoms; aromatic hydrocarbons such as toluene, xylene and the like; ketones such as methyl ethyl ketone, cyclohexanone, cyclopentanone, 4-hydroxy-4-methyl-2-pentanone and the like; esters such as methyl acetate, ethyl acetate, propyl acetate, butyl acetate, methyl 2-hydroxy-2-methylpropionate, ethyl 2-hydroxy-2-methylpropianate, methyl hydroxylacetate, ethyl hydroxyacetate, butyl hydroxyacetate, methyl lactate, ethyl lactate, butyl lactate, methyl 3-hydroxypropionate, ethyl 3-hydroxypropionate, propyl 3-hydroxypropionate, butyl 3-hydroxypropionate, propyl 2-hydroxy-3-methylbutanoate, ethyl metoxyacetate, propyl metoxyacetate, methyl etoxyacetate, ethyl etoxyacetate, propyl etoxyacetate, butyl etoxyacetate, methyl 2-metoxypropionate, ethyl 2-metoxypropionate, propyl 2-metoxypropionate, butyl 2-metoxypropionate, methyl 2-ethoxypropionate, ethyl 2-ethoxypropionate, propyl 2-ethoxypropionate, butyl 2-ethoxypropionate, methyl 3-methoxypropionate, ethyl 3-methoxypropionate, propyl 3-methoxypropionate, butyl 3-methoxypropionate, methyl 3-ethoxypropionate, ethyl 3-ethoxypropionate, propyl 3-ethoxypropionate, butyl 3-ethoxypropionate and the like; preferably, C₁ to C₄ alkyl ester of aliphatic acid having 2 to 4 carbon atoms, wherein the aliphatic acid may be optionally substituted with hydroxyl group and/or lower alkoxy group having 1 to 4 carbon atoms, and/or 5 to 6 membered cyclic ether such as tetrahydrofuran.

Considering solubility, reactivity with the organic solvent of a resin, a curing agent and a curing accelerator, concentration change with time due to vaporization, toxicity to a human body and the like, preferable among the above organic solvents are lower ether acetates of 1 to 4 carbon atoms of alkylene glycols of 2 to 3 carbon atoms such as propylene glycol monomethyl ether acetate, propylene glycol monoethyl ether acetate and ethylene glycol monobutyl ether acetate; propylene glycol monomethyl ether; 3-methoxy butanol; 3-methyl-3-methoxy butanol and esters. It is necessary to select a solvent that does not destroy monodispersion of fine silica particles in colloidal slurry.

The amount of these organic solvents to be used is not specifically defined, but may be adjusted to a give good coating suitability, according to desired thickness of the films, surface smoothness and a film-forming method and the like.

Various additives may be added to the resin composition of the present invention as needed, which include a coupling agent, a surfactant, an antioxidant, a light stabilizer, a wet resistant, a thixotropic agent, a defoaming agent, any other resin, a tackifier, an antistatic agent, a lubricant, a UV absorbent and the like.

Coupling agents usable herein include, for example, silane type coupling agents such as 3-glycidoxypropyl-trimethoxysilane, 3-glycidoxypropylmethyl-dimethoxysilane, 2-(3,4-epoxycyclohexyl)-ethyl-trimethoxysilane, N-(2-aminoethyl)-3-aminopropylmethyl-dimethoxysilane, N-(2-aminoethyl)-3-aminopropylmethyl-trimethoxysilane, 3-aminopropyl-triethoxysilane, 3-mercaptopropyl-trimethoxysilane, vinyl-trimethoxysilane, N-(2-(vinylbenzylamino)-ethyl)-3-aminopropyl-trimethoxysilane hydrochloride, 3-methacryloxypropyl-trimethoxysilane, 3-chloropropylmethyl-dimethoxysilane, 3-chloropropyl-trimethoxysilane and the like; titanate-type coupling agents such as isopropyl(N-ethylaminoethylamino) titanate, isopropyltriisostearoyl titanate, titanium di(dioctylpyrophosphate)-oxy acetate, tetraisopropyl di(dioctylphosphite)-titanate, neoalkoxy tri(p-N-(β-aminoethyl)-aminophenyl) titanate and the like; zirconium or aluminium-type coupling agents such as Zr-acetylactonate, Zr-methacrylate, Zr-propionate, neoalkoxy zirconate, neoalkoxy-trisneodecanoyl zirconate, neoalkoxy-tris(dodecanoyl)-benzenesulfonyl zirconate, neoalkoxy-tris(ethylenediaminoethyl) zirconate, neoalkoxy-tris(m-aminophenyl) zirconate, ammonium zirconium carbonate, Al-acetylacetonate, Al-methacrylate, Al-propionate and the like. Among them, silane type coupling agent is preferable, silane type coupling agent containing epoxy group is more preferable. Protective films which have the excellent adhesion property with substrate and wet-restance reliability can be obtained by using these coupling agents.

The amount of a coupling agent to be used is preferably about 0.1 to 5 parts, more preferably 0.5 to 4 based on 100 parts of an epoxy resin.

A surfactant may be used to improve coating suitability of a resin composition for protective films. For example, silicone surfactants and fluorine-containing surfactants are used, wherein the amount is usually 0.001 to 5 parts, preferably 0.01 to 4 parts, more preferably 0.1 to 3 parts, further more preferably 0.5 to 3 parts based on 100 parts of a resin, preferably an epoxy resin.

The resin composition of the present invention may be obtained as varnish, by uniformly dissolving colloidal slurry of fine silica particles, an epoxy resin having two or more epoxy groups and/or an acrylic compound, a curing agent, an imidazole-type curing accelerator for example, and various additives as needed in an organic solvent. In this case, usually, the varnish may be prepared so that its solid content may be at least 10%, preferably at least 15%, more preferably at least 20%, but at most 50%, preferably at most 40%, more preferably 35% or so. The concentration of the solid may be adjusted according to resin compositions, as appropriate. Considering the efficiency of coating and the like, the varnish may be so prepared that its viscosity at 25ºC may be 2 to 30 mPa· s, preferably 4 to 15 mPa·s.

The coating films formed from thus obtained resin composition (varnish) for protective films of the present invention have good adhesiveness to various materials such as glass, wood, metal and plastics and have good surface smoothness, heat resistance, yellowing resistance, transparency and toughness. Therefore, they are useful, for example, as various protective films, especially as coating films (coating films of high visible-light transmittance) in the area that requires high visible-light transmittance such as in organic EL elements and plasma display panels. The coating film formed from the resin composition of the present invention that satisfies high visible-light transmission has a light transmittance of preferably 95% or more at a wavelength of 400 nm, when the film is formed so as to have a thickness of preferably 1 µm, more preferably 1.5µm, further more preferably 2µm. In addition, since the coating film formed from the resin composition of the present invention is excellent in resistance to high temperature in ITO film formation, it is especially useful in forming protective films on colored resin films of color filters for liquid-crystal display, or in forming smooth layers of color filters for liquid-crystal display. In this case, the thin transparent films formed by curing the resin composition of the present invention are effective for preventing liquid crystal from being stained by ionic impurities that may be released from color filters.

When the resin compositions (varnish) of the present invention are used for protective films such as those for color filters, the resin compositions are usually coated on the color filters by spin coating. Usually, coating is so controlled that the film thickness after curing may be 0.1 to 10 µm, preferably 0.5 to 8 µm, more preferably 0.8 to 5 µm, further more preferably 0.8 to 3 µm. For efficient coating operation, the viscosity at 25ºC of the composition of the present invention is controlled to be at least 2 mPa·s, preferably at least 4 mPa·s, more preferably at least 5 mPa·s, but at most 30 mPa·s, preferably at most 15 mPa·s,more preferably at most 13 mPa·s, generally by the amount of an organic solvent to be added to the composition. When a thin film is desired, the viscosity of the composition is controlled to be at most 10 mPa·s, preferably at most 8 mPa·s. The conditions of drying and curing after coating will be optimized according to the blend ratio of the components in the composition solution and to the type of the solvent used. In the case of thermal curing, the coating layer is usually pre-baked at 70 to 100ºC to remove the solvent and then post-baked at 150 to 250ºC for 10 minutes to 1.5 hours to cure. The curing temperature may not be constant. For example, the coating layer may be cured while the temperature is raised. The pre-baking for solvent removal and the post-baking for curing may be carried out using an oven, a hot plate and the like. In the case of photocuring, post-baking is carried out usually after the solvent is removed by pre-baking and then the coating layer is irradiated to be cured using a well-known exposure device. The protective film obtained by curing the resin composition of the present invention is substantially transparent.

The color filter thus coated with the substantially transparent protective film of the present invention may be favorably used in liquid-crystal display devices and the like. An ordinary liquid-crystal display device comprises a color filter part (optionally having an ITO film or an ITO pattern), a liquid-crystal part, a backlight part and a polarizing film part. The present invention therefore provides such a liquid-crystal display device equipped with the color filter having the protective film of the present invention.

### EXAMPLE

The present invention is described more specifically with reference to the following examples, however, the present invention is not limited.

### Example 1:

A composition having the component ratios shown in the column of Example 1 in Table 1 (the numeral data are in terms of "parts") was dissolved in propylene glycol monomethyl ether acetate to prepare a resin composition of the present invention having a solid concentration of 25% and a viscosity of 5.2 mPa·s (measured with an R-type viscometer at 10 rpm). The above resin composition was then applied onto a glass substrate having a thickness of 0.7 mm with a spin coater in such a manner that the thickness of the cured film thereof could be 1.5 µm, and pre-baked at 100ºC for 2 minutes followed by curing at 220ºC for 20 minutes to form a transparent protective film of the present invention. The test results of the protective film thus obtained are given in Table 2 (the test methods are described below).

### Example 2, Comparative Examples 1 and 2:

Protective films were formed in the same manner as in Example 1 except that compositions having the component ratios shown in each column of Example 2 and Comparative Examples 1 and 2 in Table 1 were used. The test results of these protective films are given in Table 2.

### Examples 3 and 4

Protective films were formed on color filters in the same manner as in Example 1, except that micropatterned color filters (glass substrates with a colored resin film formed thereon) were used in place of the glass substrates in Examples 1 and 2. The test results of these protective films are given in Table 2.

### [Table 1]

**Table 1**

| | Example 1 | Example 2 | Comparative Example 1 | Comparative Example 2 |
|---|---|---|---|---|
| Epoxy resin A | 100 | 100 | 100 | 100 |
| Curing agent A | 74 | 74 | 74 | 74 |
| Curing accelerator A | 2 | 2 | 2 | 2 |
| Additive A | 1 | 1 | 1 | 1 |
| Additive A | 1 | 1 | 1 | 1 |
| Slurry A of fine silica particles | 76 | | | |
| Slurry B of fine silica particles | | 76 | | |
| Slurry C of fine silica particles | | | | 76 |

Details of each component in Table 1 are as follows:
Epoxy resin A: a glycidyl ether compound of 2-(4-hydroxyphenyl)-2-[4-[1,1-bis(4-hydroxyphenyl)-ethyl]-phen yl]-propane (trade name: VG3101, epoxy equivalent: about 211 g/eq, by Mitsui Chemicals) {the compound is considered to be 2-[4-(2,3-epoxypropoxy)phenyl]-2-[4-[1,1-bis[4-(2,3-epoxypropo xy)-phenyl]-ethyl]-phenyl]-propane}
Curing agent A: nobolac-type phenol resin having a terpene skeleton (hydroxyl equivalent: 174 g/eq, trade name: Epicure MP402FPY, by Japan Epoxy Resin Inc.)
Curing accelerator A:
   2,3-dihydro-1H-pyrrolo-[1,2-a]-benzimidazole (trade name: Curezol TBZ, by Shikoku Corp.)
   Additive A: Fluorine-type surfactant, Megaface F470 (by Dainippon Ink and Chemicals Inc.)
   Additive B: Epoxy-silane-type coupling agent, Sila-Ace S-510 (by Chisso Corporation)
   Slurry A of fine silica particles: Colloidal silica slurry (Na concentration: 1 ppm or less, average diameter of fine silica particles: 19 nm, pH: 7.3), trade name: PL-2L-PGME (by Fuso Chemical Co.,Ltd.)
   Slurry B of fine silica particles: Colloidal silica slurry (Na concentration: 1 ppm or less, average diameter of fine silica particles: 33 nm, pH: 7.2), trade name: PL-3L-PGME (by Fuso Chemical Co.,Ltd.)
   Slurry C of fine silica particles: Colloidal silica slurry (Na concentration: 0.6% by weight or less, average diameter of fine silica particles: 14 nm, pH: 4.7), trade name: PGM-ST (by Nissan Chemical Industries, Ltd.)

Numerals in the table for slurries of fine silica particles show the amounts of solid silica particles.

### [Table 2]

**Table 2**

| | Example | | | | Comparative Example | |
|---|---|---|---|---|---|---|
| | 1 | 2 | 3 | 4 | 1 | 2 |
| ITO Test | O | O | O | O | × | O |
| Storage stability | O | O | O | O | O | gelation |
| Transparency | O | O | -- | -- | O | O |
| Heat resistance | O | O | -- | -- | × | O |

In Table 2, the test methods and evaluation standards are as follows:

### 1. ITO Test

A film of 1.5 µm in thickness was formed on a glass substrate from each composition followed by sputtering of ITO thereon at 200ºC so that the deposited film have a thickness of 1,500 A (Angstrom)and a sheet resistance of 20O/□, and then observed its appearance. ○ indicates that there in no change in appearance; Δ indicates that there are wrinkles and cracks partially; and × indicates that there are wrinkles and cracks all over, and whitening.

### 2. Storage stability

A composition solution of 500 g having a solid concentration of 25% was stored in a capped glass coat bottle of 1 L at 5ºC for 1 month and then checked viscosity change. O indicates a viscosity change within 5% of the original viscosity; Δ indicates a viscosity change between 5% and 10% of the original viscosity; and × indicates a viscosity change of 10% or more of the original viscosity.

### 3. Transparency

Transmittance at a wavelength of 400 nm of the obtained transparent thin film was measured with a spectrophotometer and converted to the film thickness of 1 µm. O indicates 95% or higher; Δ indicates 90 to 95%; and × indicates 90% or lower.

### 4. Heat resistance test

Each of the obtained protective films was kept in an oven at 250ºC for 60 minutes, and visually checked yellowing thereof. The film was compared with the original film before the heat treatment and judged the yellowing resistance thereof. ○ indicates that there is little change in appearance; Δ indicates that there is yellowing to some extent; and × indicates that there is too much yellowing to use.

As apparent from Table 2, a resin composition of the present invention is good in operability thanks to its excellent storage stability, and has superior transparency, heat resistance and especially high ITO resistance.

### INDUSTRIAL APPLICABILITY

The resin composition for protective films of the present invention is excellent in storage stability and operability and can form a cured film of superior properties such as high ITO resistance, high surface smoothness and high water resistance and thus can be used as a resin composition for forming an excellent protective film. Since the resin composition hardly stains liquid crystal and the like, it is suitable for forming a protective film for a colored resin film. Therefore, when the resin composition is used for forming a protective film for a color filter in color liquid-crystal display devices, it can improve the reliability of the devices.

## Claims

1. A resin composition for protective films which comprises an epoxy resin having two or more epoxy groups, a curing agent, a curing accelerator, a solvent, and a colloidal slurry of fine silica particles wherein the fine silica particles have an average particle diameter, as determined by conversion from the specific surface area, of 50 nm or smaller, a pH of 6 to 8, and an alkali metal content of 5 ppm or lower.

2. The resin composition as claimed in claim (1), wherein the fine silica particles (solid content) in the colloidal slurry is 10 to 150 parts by mass based on 100 parts by mass of the total amount of the epoxy resin having two or more epoxy groups, the curing agent and the curing accelerator.

3. The resin composition as claimed in claim 1, wherein the curing agent is a polyhydric phenol having a cyclic terpene skeleton.

4. The resin composition as claimed in claim 3, wherein the polyhydric phenol having a cyclic terpene skeleton is a compound obtained by the addition of two phenol molecules to one cyclic terpene compound molecule and/or a compound obtained by condensation reaction of the above compound with aldehydes and/or ketones in the presence of an acid catalyst.

5. The resin composition as claimed in any one of claims 1 to 4, wherein the curing accelerator is an imidazole-type curing accelerator.

6. A resin composition for protective films which comprises an acrylic resin, a solvent and a colloidal slurry of fine silica particles, wherein the fine silica particle have an average primary particle diameter, as determined by conversion from the BET specific surface area, of 50 nm or smaller, a pH of 6 to 8, and an alkali metal content of 5 ppm or lower.

7. The resin composition as claimed in any one of claims 1 to 4 or 6, wherein a film of 1 µm in thickness made of the resin composition for protective films has a transmittance of 95% or higher in the light of a wavelength of 400 nm.

8. The resin composition as claimed in any one of claims 1 to 4 or 6, that is for a protective film for a color filter.

9. A substantially transparent protective film obtained by curing the resin composition as claimed in any one of claims 1 to 4 or 6.

10. A liquid-crystal display device equipped with a color filter comprising the protective film as claimed in claim 9.
